Europäisches Patentamt

**European Patent Office**

**Office européen des brevets**

(11) Veröffentlichungsnummer: **0 092 848**

**A2**

(12) **EUROPÄISCHE PATENTANMELDUNG**

(21) Anmeldenummer: **83104111.6**

(22) Anmeldetag: **27.04.83**

(51) Int. Cl.³: **B 65 G 1/04**
**B 65 G 37/02**

(30) Priorität: **28.04.82 DE 3215744**

(43) Veröffentlichungstag der Anmeldung:
**02.11.83 Patentblatt 83/44**

(84) Benannte Vertragsstaaten:
**AT BE CH DE FR GB IT LI NL SE**

(71) Anmelder: **Gebhardt Fördertechnik GmbH**
**Postfach 304**
**D-6920 Sinsheim(DE)**

(72) Erfinder: **Felder, Hans Christian**
**Forsthausstrasse 12**
**D-6022 Dreieichenhain(DE)**

(74) Vertreter: **Neugebauer, Bernhard**
**Tölzer Strasse 7**
**D-7100 Heilbronn(DE)**

(54) **Sortiervorrichtung für Stückgut.**

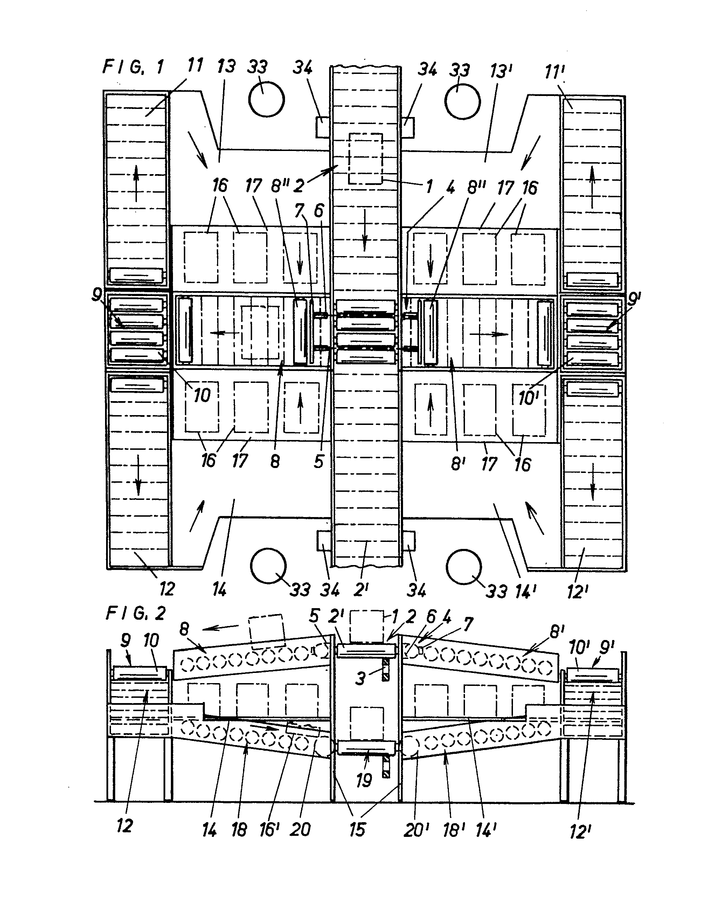

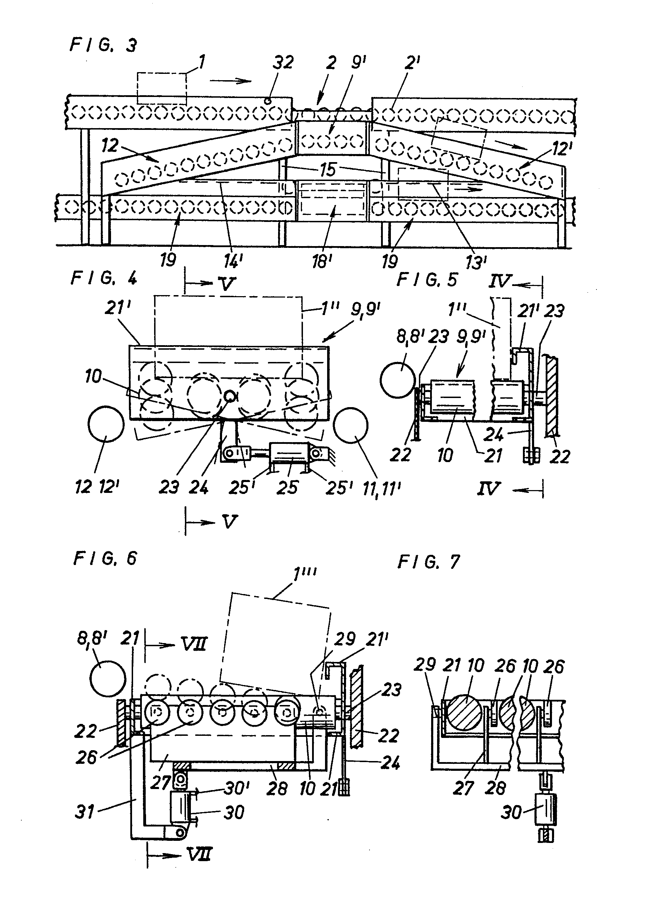

(57) In Warenlagern mit einer großen Anzahl von unterschiedlichen Warenarten müssen laufend Waren ihrem zuständigen Lagerplatz zugeführt werden. Die ungeordnet ankommenden Waren müssen kontrolliert, sortiert, registriert und weitergeleitet werden. Dies bedeutet einen erheblichen Aufwand an Fördermitteln und eine Vielzahl von Handhabungen. Aufgabe der Erfindung ist es daher, eine Sortiervorrichtung zu schaffen, die mit einfachen Mitteln eine hohe Sortierleistung ermöglicht. Gelöst wird diese Aufgabe durch eine Sortiervorrichtung mit einem zufördernden Hauptförderer, einer Sortierstation und einem Abförderer, die durch Zwischenbahnen miteinander verbunden sind, dadurch, daß die Zwischenbahnen vor und nach der Sortierstation (13, 14, 13', 14') als Schwerkraftrollenbahn ausgebildet sind und daß zwischen Hauptförderer (2) und Sortierstation (13, 14, 13', 14') mindestens ein in die Transportrichtung neigbarer, als Schwerkraftrollenbahn ausgebildeter Verteiler (9, 9') angeordnet ust. Die Sortiervorrichtung ist in Fig. 1 umfassend dargestellt.

FIG. 1

EP 0 092 848 A2

Sortiervorrichtung für Stückgut

Die Erfindung betrifft eine Sortiervorrichtung für Stückgut
mit einem zufördernden Hauptförderer, einer Sortierstation
und einem Abförderer, die durch Zwischenbahnen miteinander
verbunden sind.

In Warenlagern mit einer großen Anzahl von unterschiedlichen
Warenarten müssen laufend Waren ihrem zuständigen Lagerplatz
zugeführt werden. Die ungeordnet ankommenden Waren müssen so
kontrolliert, sortiert und dann weitergeleitet werden. Da an
jeder Sortierstation alle Warensorten bearbeitet werden müssen, ist die Verbindung jeder Sortierstation mit jedem Einzellager unerläßlich. Zu dem ist jede Ware im zentralen Speicher zu registrieren, um eine Kontrolle über den jeweiligen
Lagerbesteand und die Warenbewegung zu erhalten. Die in der
Sortiervorrichtung zu bewältigenden Arbeiten sind daher umfangreich und vielfältig.

Aufgabe der Erfindung ist es daher, eine Sortiervorrichtung
zu schaffen, die mit einfachen Mitteln eine hohe Sortierleistung ermöglicht.

Diese Aufgabe wird durch die Erfindung dadurch gelöst, daß
die Zwischenbahnen vor und nach der Sortierstation als Schwerkraftrollenbahnen ausgebildet sind und daß zwischen Hauptförderer und Sortierstation mindestens ein in die Transportrichtung neigbarer, als Schwerkraftrollenbahn ausgebildeter
Verteiler angeordnet ist.

Die mit der Erfindung erzielten Vorteile bestehen insbesondere
darin, daß durch die Ausbildung der Zwischenbahnen und des
Verteilers als Schwerkraftrollenbahn ein einfacher Aufbau
gegeben ist, da keine separaten Antriebe dafür erforderlich
sind, die zudem getrennt gesteuert werden müssen. Zur Steuerung der gesamten Sortiervorrichtung genügt daher die Erfassung der Belegung von Verteiler und Sortierstation. Insbesondere läßt sich auf einfache Weise eine eindeutige und sichere Weiterleitung der Stückgüter erreichen, wodurch die nachgeschalteten Sortierstationen laufend bei Bedarf mit zu sortierendem Stückgut versorgt werden. Die Auslastung der Sortierstationen ist somit gewährleistet, so daß die Sortierleistung entsprechend hoch ist. Es können ferner Stückgüter verschiedener Art, insbesondere Größe, einzeln oder auch in Behältern sortiert an die verschiedenen Ziele, z.B. die Einzellager weitergeleitet werden. Die Sortiervorrichtung nach der Erfindung ist somit vielfältig für Stückgüter aller Art einsetzbar.

Weitere Merkmale der Erfindung sind in der nachfolgenden Beschreibung und den Unteransprüchen beschrieben.

Ein Ausführungsbeispiel der Erfindung ist in der Zeichnung dargestellt und wird im folgenden näher erläutert.
Es zeigen:
Fig. 1  die Draufsicht auf die Sortiervorrichtung;
Fig. 2  die Frontansicht der Sortiervorrichtung;
Fig. 3  eine Seitenansicht der Sortiervorrichtung;
Fig. 4  die Seitenansicht des Verteilers gem. Linie IV - IV in Fig. 5;
Fig. 5  die Schnittansicht gem. Linie V - V in Fig. 4;
Fig. 6  einen Querschnitt durch den Verteiler anderer Ausführung;
Fig. 7  die Schnittansicht gem. Linie VII - VII in Fig. 6.

Die Sortiervorrichtung für Stückgut o. dgl. gem. den Fig. 1 bis 3 weist einen die Stückgüter 1 zufördernden Hauptförderer 2 auf, der als Rollenbahn mit z.B. durch einen umlaufenden Riemen 3 angetriebenen Rollen 2' ausgebildet ist. Innerhalb der Sortiervorrichtung ist im Hauptförderer 2 ein Querförderer 4 eingebaut, der als Kettenschieber mit mindestens zwei parallelen, im oberen Trum zwischen benachbarten Rollen 2' unterhalb der Transportebene gelagerten Kettenzügen 5 besteht.

Letztere sind außerhalb neben dem Hauptförderer 2 durch miteinander verbundene Kettenräder 6 umgelenkt, die durch einen nicht dargestellten Getriebemotor angetrieben werden. An den Kettenzügen 5 sind in gleichen Abständen zwei Schieber 7 befestigt, die oberhalb der Transportebene des Hauptförderers 2 über diesen geführt werden und dann ein darauf befindliches Stückgut 1 seitlich abschieben. Der Getriebemotor ist vorzugsweise reversierbar antreibbar, so daß wahlweise ein Stückgut 1 nach der einen doer der anderen Seite abgeschoben werden kann. In der Ruhestellung stehen die Schieber 7 in gleichen Abständen neben dem Hauptförderer 2.

Vorzugsweise an beiden Seiten des Hauptförderers 2 in Verlängerung des Querförderers 4 sind Nebenbahnen 8 bzw. 8' vorgesehen, die als Schwerkraftrollenbahn mit frei drehbar gelagerten Tragrollen 8'' ausgebildet sind. Die Nebenbahnen 8 bzw. 8' sind in Transportrichtung nach der Seite geneigt und münden in je einen Verteiler 9 bzw. 9'. Dieser besitzt eine Gruppe von frei drehbar in einem Rahmen, senkrecht zu den Tragrollen 8'' der Nebenbahn 8 bzw. 8' gelagerte Rollen 10 bzw. 10', um ein auf diese geschobenes Stückgut parallel zum Hauptförderer 2 weiterzutransportieren. Beiderends am Verteiler 9 bzw. 9' schließen sich als weitere Zwischenbahn ebenfalls als Schwerkraftrollenbahn ausgebildete Zuführbahnen 11 und 12 bzw. 11' und 12' an, die entsprechend geneigt angeordnet sind und auf Höhe von im wesentlichen als Plattform ausgebildeten Sortierstationen 13 und 14 bzw. 13' und 14' enden. Letztere erstrekken sich zwischen Zuführbahn 11, 12, 11' und 12' und Hauptförderer 2 bzw. dem diesen tragenden Gestell 15. Der Sortierstation 13, 14, 13', 14' nachgeordnet ist auf gleicher Höhe eine Abstellfläche 17 für das Stückgut bzw. Behälter 16. Zwischen gegenüberliegenden Abstellflächen 17, also unterhalb der Nebenbahn 8 bzw. 8' ist eine gleichfalls als Schwerkraftrollenbahn ausgebildete Ladebahn 18 bzw. 18' vorgesehen, die mit entsprechender Neigung beiderseits an einem unterhalb des Hauptförderers 2 am Gestell 15 gelagerten Abförderer 19 endet.

Letzterer besteht aus einer die Sortiervorrichtung durchkreuzenden, angetriebenen Rollenbahn. Die letzte Rolle der Ladebahn 18 bzw. 18' vor dem Abförderer 19 ist als angetriebene Laderolle 20 bzw. 20' ausgebildet. Diese überragt etwas die Transportebene der Ladebahn 18 bzw. 18', so daß auf dieser rollendes Stückgut 16' (Fig. 2) gegen die Laderolle 20 bzw. 20' stößt und angehalten wird. Erst nach Einschalten der Laderolle 20 bzw. 20' wird das Stückgut 16' über die Laderolle 20 bzw. 20' auf den Abförderer 19 geschoben. Der Antrieb der Laderolle 20 bzw. 20' erfolgt durch einen nicht dargestellten Motor, der innerhalb oder auch außerhalb der Laderolle 20 bzw. 20' angeordnet sein kann. Gesteuert wird die Laderolle 20 bzw. 20' durch Fühler, wie z.B. Lichtschranken o. dgl., die ein bestehendes Stückgut 16' melden, sowie den Abförderer 19 überwachen, um den geeigneten Zeitpunkt zum Einschalten der Laderolle 20 bzw. 20' zu ermitteln.

Gem. den Fig. 4 und 5 sind die Rollen 10 des Verteilers 9 bzw. 9' in einem Rahmen 21 drehbar gelagert, der mittig um eine parallel zur Längsachse der Rollen 10 angeordnete, von einem feststehenden Außenrahmen 22 getragene Achse 23 nach beiden Seiten kippbar ist. Der Rahmen 21 endet oben unterhalb der Transportebene der Rollen 10. Lediglich die außen, also gegenüber der Nebenbahn 8 bzw. 8' stehende Wand 21' ist erhöht und dient als Anschlag für das von der Nebenbahn 8 bzw. 8' auf die Rollen 10 geschobene Stückgut 1'' (Fig. 5). Unterhalb der Achse 23 ist am Rahmen 21 ein nach unten ragender Arm 24 befestigt, an dem die Kolbenstange eines Stellzylinders 25 angelenkt ist, der seinerseits ortsfest am Außenrahmen 22 gelagert ist. Durch Anschlüsse 25' wird Druckmittel zu- und abgeleitet, um die Kolbenstange aus der dargestellten Mittelstellung in eine der beiden Endstellungen zu bewegen und damit den Rahmen 21 zu kippen.

In der waagerechten, in Fig. 4 mit ausgezogenen Linien dargestellten Ladestellung liegen die Achsen der Rollen 10 etwa parallel zu den Achsen der Tragrollen 8'' der Nebenbahn 8, 8'.

Je nach Erfordernis wird der Rahmen 21 nach der einen oder anderen Seite in eine der Endstellungen geneigt, wie strichpunktiert angedeutet ist, so daß die Transportebene des Verteilers 9 bzw. 9' etwa in Verlängerung der Transportebene der Zuführbahn 11, 12, 11' oder 12' liegt und ein darauf stehendes Stückgut 1'' in Richtung der Neigung abrollt.

In weiterer Ausgestaltung gem. den Fig. 6 und 7 kann im Verteiler 9 bzw. 9' noch eine Rollengruppe 26 vorgesehen sein, die zwischen den Rollen 10 an vertikalen Stegen 27 drehbar gelagert sind. Die Stege 27 stehen auf einem Stützrahmen 28, der am der Nebenbahn 8 bzw. 8' gegenüberliegenden Ende des Rahmens 21 an Bolzen 29 schwenkbar gelagert ist. Unten am Stützrahmen 28 ist ein nach oben wirkender Stellzylinder 30 angelenkt, der an einem Tragarm 31 des Rahmens 21 gelagert ist. Durch Einleiten von Druckmittel in einen der Anschlüsse 30' kann die Rollengruppe 26 im Uhrzeigersinn aus der unterhalb der Transportebene der Rollen 10 liegenden Ruhestellung in die strichpunktierte, angehobene Aufnahmestellung etwa in Verlängerung der Transportebene der Nebenbahn 8 bzw. 8' geschwenkt werden, in der das Stückgut 1''' aufgenommen und durch Absenken auf die Rollen 10 gesetzt werden kann.

Es ist ersichtlich, daß ein auf dem Hauptförderer 2 herangefördertes Stückgut 1 durch Passieren einer Schalteinrichtung 32, wie Lichtschranke o. dgl., den Querförderer 4 so einschaltet, daß es je nach der vorprogrammierten Freigabe nach der einen oder anderen Seite auf eine der Nebenbahnen 8 bzw. 8' geschoben wird, auf dieser nach unten rollt und auf dem Verteiler 9 bzw. 9' stehen bleibt. Ist in diesem die Rollengruppe 26 vorgesehen, dann ist diese vorher angehoben worden, um nach Aufnahme des Stückgutes 1''' bzw. erst kurz vor dem Weitertransport abgesenkt zu werden. Sobald die Aufnahmestelle der nachgeordneten Sortierstation 13, 14, 13', 14' frei ist, wird der Verteiler 9 bzw. 9' in Richtung der zugeordneten Zuführbahn 11, 12, 11' oder 12' geneigt und das Stückgut rollt auf dieser nach unten, wie auf der Zuführbahn 12' in Fig. 3 gezeigt ist.

Auf der Sortierstation 13, 14, 13' oder 14' wird durch eine Person 33 das Stückgut kontrolliert und einem Lagerplatz zugeordnet. Die Daten hierüber werden in die Eingabe 34 eines Speichers o. dgl. gegeben. Danach wird das Stückgut auf die Abstellfläche 17 bzw. einen dort stehenden, dem zugeordneten Ziel vorgesehenen Behälter 16 gelegt. Durch Abschieben auf die Ladebahn 18 bzw. 18' gelangt das Stückgut 16' bis zum Anschlag an die Laderolle 20 bzw. 20'. Ist auf dem Abförderer 19 ausreichend Zwischenraum zwischen aufeinanderfolgenden Stückgütern, dann wird die Laderolle 20 bzw. 20' eingeschaltet und das Stückgut bzw. der Behälter 16' auf den Abförderer 19 geschoben, um auf diesem dem vorbestimmten Ziel zugefördert zu werden.

Natürlich können auch zwischen dem Hauptförderer 2 und der Sortierstation 13, 14, 13' und/oder 14' mehrere Verteiler 9, 9' vorgesehen sein, um eine weitere Verzweigung mit entsprechend in größerer Anzahl nachgeordneten Sortierstationen zu erhalten. Desgleichen kann am Querförderer 4 und/oder am Verteiler 9 bzw. 9' auch nur an einer Seite eine Nebenbahn 8 bzw. 8' bzw. Zuführbahn 11, 12, 11' oder 12' angeschlossen sein, um die Sortiervorrichtung an die gegebenen Räumlichkeiten und/oder die Sortierleistung anzupassen.

Patentansprüche

1. Sortiervorrichtung für Stückgut mit einem zufördernden Hauptförderer, einer Sortierstation und einem Abförderer, die durch Zwischenbahnen miteinander verbunden sind, dadurch gekennzeichnet, daß die Zwischenbahnen vor und nach der Sortierstation (13, 14, 13', 14') als Schwerkraftrollenbahnen ausgebildet sind und daß zwischen Hauptförderer (2) und Sortierstation (13, 14, 13', 14') mindestens ein in die Transportrichtung neigbarer, als Schwerkraftrollenbahn ausgebildeter Verteiler (9, 9') angeordnet ist.

2. Sortiervorrichtung nach Anspruch 1, dadurch gekennzeichnet, daß zum Ausschleusen aus dem Hauptförderer (2) ein angetriebener, als Kettenschieber ausgebildeter Querförderer (4) und zum Einführen in den Abförderer (19) eine antreibbare Laderolle (20, 20') vorgesehen ist.

3. Sortiervorrichtung nach den Ansprüchen 1 und 2, dadurch gekennzeichnet, daß als Zwischenbahn dem Querförderer (2) eine Nebenbahn (8, 8') nachgeordnet ist, die in einen der Verteiler (9, 9') mit senkrecht zur Nebenbahn (8, 8') liegender Transportrichtung mündet, der um eine parallel zur Längsachse der Nebenbahn (8, 8') angeordnete Achse (23) gegen eine am Ausgang des Verteilers (9, 9') vorgesehene, als Zuführbahn (11, 12, 11', 12') zur Sortierstation (13, 14, 13', 14') dienende Zwischenbahn kippbar ist.

4. Sortiervorrichtung nach den Ansprüchen 1 bis 3, dadurch gekennzeichnet, daß beiderends am Verteiler (9, 9') eine parallel zum Hauptförderer (2) verlaufende Zuführbahn (11, 12, 11', 12') vorgesehen ist und der Verteiler (9,9') aus einer waagerechten Ladestellung gegen die eine oder andere Zuführbahn (11, 12, 11', 12') in eine Entladestellung kippbar ist.

5. Sortiervorrichtung nach den Ansprüchen 3 und 4, dadurch gekennzeichnet, daß im Verteiler (9, 9') eine um eine Achse parallel zur Transportrichtung des Verteilers (9,9') kippbar angeordnete Rollengruppe (26) vorgesehen ist, die zwischen den Rollen (10) des Verteilers (9, 9') heb- und senkbar angeordnet und aus einer Ruhestellung unterhalb der Transportebene des Verteilers (9, 9') in eine Ebene etwa parallel zur Transportebene der Nebenbahn (8, 8') oberhalb der Transportebene des Verteilers (9, 9') kippbar ist.

6. Sortiervorrichtung nach mindestens einem der Ansprüche 1 bis 5, dadurch gekennzeichnet, daß die Sortierstation (13, 14, 13', 14') aus einer zwischen dem Hauptförderer (2) und der Zuführbahn (11, 12, 11', 12') angeordneten, etwa auf Höhe einer als Schwerkraftrollenbahn ausgebildeten Ladebahn (18, 18') angeordneten Plattform besteht.

7. Sortiervorrichtung nach mindestens einem der Ansprüche 1 bis 6, dadurch gekennzeichnet, daß der Abförderer (19) unterhalb des Hauptförderers (2) und die Ladebahn (18, 18') unterhalb des Nebenförderers (8, 8') angeordnet ist.

FIG. 1

11 13 33 34 34 33 13' 11'

16 17 8" 2 1 4 8" 17 16

7 6

9 9'

10 10'

16 17 8 5 8' 17 16

12 14 33 34 2' 34 33 14' 12'

FIG. 2

5 2' 1 2 6 4 7

8 8'

9 10 10' 9'

3

19

12 14 18 16' 20 15 20' 18' 14' 12'

FIG. 3

FIG. 4

FIG. 5

FIG. 6

FIG. 7